# EUROPÄISCHE PATENTSCHRIFT

(11) **EP 2 171 001 B1**
(45) Veröffentlichungstag und Bekanntmachung des Hinweises auf die Patenterteilung: **21.05.2014**
(21) Anmeldenummer: 08774568.3
(22) Anmeldetag: 01.07.2008
(51) Int. Cl.: C09C 1/30, C08K 9/06, C09D 7/00, C09D 7/12, B82Y 30/00, C08K 3/34

(54) **OBERFLÄCHENMODIFIZIERTE, PYROGEN HERGESTELLTE KIESELSÄUREN**
SURFACE-MODIFIED, PYROGENICALLY PRODUCED SILICIC ACID
ACIDES SILICIQUES PYROGÈNES À SURFACE MODIFIÉE

(30) Priorität: 30.07.2007 DE 102007035952
(43) Veröffentlichungstag der Anmeldung: 07.04.2010
(73) Patentinhaber: Evonik Degussa GmbH, 45128 Essen (DE)
(72) Erfinder: MEYER, Jürgen, 63811 Stockstadt (DE); SCHOLZ, Mario, 63584 Gründau (DE); SCHUMACHER, Kai, 65719 Hofheim (DE)
(86) Internationale Anmeldenummer: PCT/EP2008/058418
(87) Internationale Veröffentlichungsnummer: WO 2009/015970

(56) Entgegenhaltungen:
- EP-A- 1 304 332
- EP-A- 1 686 093
- DE-A1- 19 616 781
- US-A- 5 900 315
- US-A1- 2003 138 715

## Beschreibung

Die Erfindung betrifft eine oberflächenmodifizierte, pyrogen hergestellte Kieselsäure, ein Verfahren zu ihrer Herstellung sowie ihre Verwendung.

Es ist bekannt, aus pyrogen hergestellte Kieselsäuren durch Oberflächenmodifizierung oberflächenmodifizierte pyrogene Kieselsäuren herzustellen. So hergestellte Kieselsäuren finden in vielen Anwendungsbereichen Verwendung, zum Beispiel zur Rheologiesteuerung von flüssigen Systemen oder in flüssigen Silikonkautschuksystemen (LSR). Neben der Rheologiesteuerung kommt dabei auch der Einarbeitbarkeit in das flüssige System eine große Bedeutung zu.

Die bekannten oberflächenmodifizierten, pyrogenen Kieselsäuren weisen den Nachteil auf, dass ihre Einarbeitbarkeit in flüssige Systeme unbefriedigend ist.

So offenbart die DE 196 16 781 A1 beispielsweise eine Kieselsäure, die mit Hexamethyldisilazan als Oberflächenmodifizierungsmittel behandelt wurde, welche aber zusätzlich durch mechanische Einwirkung destrukturiert und anschließend nachvermahlen wurde. Diese Behandlung bewirkt zwar hohe Füllgrade und gute mechanische Festigkeiten aber eine Erniedrigung der Verdickungswirkung bzw. niedrige Viskositäten verbunden mit niedrigen Fließgrenzen.

Es bestand somit die Aufgabe, oberflächenmodifizierte pyrogene Kieselsäuren herzustellen, die eine verbesserte Einarbeitbarkeit in flüssige Systeme besitzen, ohne andere wichtige Eigenschaften, wie die Rheologiesteuerung zu beeinträchtigen.

Gegenstand der Erfindung ist eine oberflächenmodifizierte, pyrogen hergestellte Kieselsäure, welche sich dadurch auszeichnet, dass ihre Einarbeitbarkeit in flüssige Systeme ohne Beeinträchtigung der Rheologiesteuerung verbessert ist. Diese oberflächenmodifizierte pyrogen hergestellte Kieselsäure, ist dadurch erhältlich, dass man eine pyrogen hergestellte Kieselsäure, die in Form von Aggregaten von Primärpartikeln mit einer BET-Oberfläche von 300 ± 25 m²/g vorliegt und die Aggregate eine mittlere Fläche von 4800 - 6000 nm², einen mittleren, äquivalenten Kreisdurchmesser (ECD = Equivalent Circle Diameter) von 60 - 80 nm und einen mittleren Umfang von 580 - 750 nm aufweisen, mit Hexamethyldisilazan oberflächenmodifiziert.

Ein weiterer Gegenstand der Erfindung ist ein Verfahren zur Herstellung der oberflächenmodifizierten pyrogen hergestellten Kieselsäure, welches dadurch gekennzeichnet ist, dass man eine pyrogen hergestellte Kieselsäure, die in Form von Aggregaten von Primärpartikeln mit einer BET-Oberfläche von 300 ± 25 m²/g vorliegt und die Aggregate eine mittlere Fläche von 4800 - 6000 nm², einen mittleren, äquivalenten Kreisdurchmesser (ECD = Equivalent Circle Diameter) von 60 - 80 nm und einen mittleren Umfang von 580 - 750 nm aufweisen, mit Hexamethyldisilazan oberflächenmodifiziert.

Die als Edukt eingesetzte pyrogen hergestellte Kieselsäure ist bekannt aus der EP 1 686 093 A2.

Die Oberflächenmodifizierung kann man durchführen, indem man die Kieselsäuren mit Wasser und anschließend mit dem Oberflächenmodifizierungsmittel besprüht. Die Besprühung kann auch in umgekehrter Reihenfolge erfolgen. Das eingesetzte Wasser kann mit einer Säure, zum Beispiel Salzsäure, bis zu einem pH-Wert von 7 bis 1 angesäuert sein. Falls mehrere Oberflächenmodifizierungsmittel eingesetzt werden, können diese gemeinsam, aber getrennt, nacheinander oder als Gemisch aufgebracht werden.

Die oder das Oberflächenmodifizierungsmittel können in geeigneten Lösungsmitteln gelöst sein. Nachdem das Sprühen beendet ist, kann noch 5 bis 30 min nachgemischt werden. Das Gemisch wird anschließend bei einer Temperatur von 20 bis 400 °C über einen Zeitraum von 0,1 bis 6 h thermisch behandelt. Die thermische Behandlung kann unter Schutzgas, wie zum Beispiel Stickstoff, erfolgen.

Eine alternative Methode der Oberflächenmodifizierung der Kieselsäuren kann man durchführen, indem man die Kieselsäuren mit dem Oberflächenmodifizierungmittel in Dampfform behandelt und das Gemisch anschließend bei einer Temperatur von 50 bis 800 °C über einen Zeitraum von 0,1 bis 6 h thermisch behandelt. Die thermische Behandlung kann unter Schutzgas, wie zum Beispiel Stickstoff, erfolgen.

Die Temperaturbehandlung kann auch mehrstufig bei unterschiedlichen Temperaturen erfolgen.

Die Aufbringung des oder der Oberflächenmodifizierungsmittel kann mit Einstoff-, Zweistoff- oder Ultraschalldüsen erfolgen.

Die Oberflächenmodifizierung kann man in beheizbaren Mischern und Trocknern mit Sprüheinrichtungen kontinuierlich oder ansatzweise durchführen. Geeignete Vorrichtungen können zum Beispiel sein: Pflugscharmischer, Teller-, Wirbelschicht- oder Fließbetttrockner.

Als Oberflächenmodifizierungsmittel wird Hexamethyldisilazan eingesetzt.

Die erfindungsgemäße oberflächenmodifizierte, pyrogen hergestellte Kieselsäure kann als Füllstoff für flüssigen Silikonkautschuk (LSR) verwendet werden.

Ein weiterer Gegenstand der Erfindung ist die Verwendung der pyrogenen Kieselsäure gemäß der vorliegenden Erfindung in flüssigen Silikonkautschuksystemen (LSR)zur Rheologiesteuerung.

Die Erfindung weist die folgenden Vorteile auf: Leichtere Einarbeitbarkeit in flüssige Systeme, ohne die Rheologiesteuerung zu beeinträchtigen.

### Beispiele

### Herstellung der Vergleichskieselsäure

2 kg AEROSIL® 300 wurden in einem Mischer vorgelegt und unter Mischen zunächst mit 0,09 kg Wasser und anschließend mit 0,36 kg Hexamethyldisilazan (HMDS) besprüht. Nach beendetem Sprühen wurde noch 15 Minuten nachgemischt. Das Reaktionsgemisch wurde zunächst 5 Stunden bei 65°C und anschließend 2 Stunden bei 285 °C unter einer Stickstoffatmosphäre getempert.

### Herstellung der erfindungsgemäßen Kieselsäure - Beispiel

2 kg der Kieselsäure 2 (Tabelle 4 aus EP 1 686 093) wurden in einem Mischer vorgelegt und unter Mischen zunächst mit 0,09 kg Wasser und anschließend mit 0,36 kg Hexamethyldisilazan (HMDS) besprüht. Nach beendetem Sprühen wurde noch 15 Minuten nachgemischt. Das Reaktionsgemisch wurde zunächst 5 Stunden bei 65°C und anschließend 2 Stunden bei 285 °C unter einer Stickstoffatmosphäre getempert.

### Physikalisch-chemische Daten

| Bezeichnung | Stampfdichte [g/l] | Trocknungsverlust [%] | Glüh-Verlust [%] | pH-Wert | C-Gehalt [%] | Spezifische Oberfläche nach BET [m²/g] |
|---|---|---|---|---|---|---|
| Vergleichskieselsäure | 58 | 0,2 | 2,9 | 7,3 | 3,1 | 218 |
| Erfindungsgemäße Kieselsäure | 60 | 0,1 | 2,9 | 7,1 | 3,1 | 220 |

### Ermittlung des Einarbeitungsverhaltens

Zur Ermittlung des Einarbeitungsverhaltens wurde die Zeit gemessen, die notwendig ist, bis die Kieselsäure in einem Siliconpolymer vollständig benetzt ist.

Es werden 800,0 g Siliconpolymer (Silopren U 10; GE Bayer)in das Rührgefäß des Planetendissolvers eingewogen.

200,0 g Kieselsäure werden kontinuierlich durch das Schauglas zugegeben und bei einer Geschwindigkeit von 50 min-1 des Planetenantriebs und 500 min-1 des Dissolvers eingearbeitet.

Die Zeit, die notwendig ist, bis zur vollständigen Benetzung der Kieselsäure im Siliconpolymer, ist die Einarbeitungszeit. Sie soll möglichst klein sein.

### Ermittlung der Verdickungswirkung in einem Siliconpolymer

### Herstellung der Probe:

40 g Siliconpolymer U 10 werden vorgelegt.

Zunächst werden 5,00 g Kieselsäure in 30 s bei 3000 min-1 eingearbeitet. Danach werden weitere 5,00 g Kieselsäure in 30 s bei 3000 min-1 eingearbeitet.

Anschließend wird 60 s bei 3000 min-1 dispergiert. Danach wird der Becher geöffnet und die Wand und der Deckel abgekratzt.

Danach wird 2 mal 60 s bei 3000 min-1 dispergiert.

Die Verdickung wird mit einem Rheometer RheoStress 1 der Fa. Haake bestimmt (Meßwerkzeuge: Kegel mit D = 35 mm, 2° Meßplattenaufsatz MPC 35).

### Einarbeitungsverhalten und Verdickungswirkung - Ergebnisse

| Bezeichnung | Einarbeitungszeit [min] | Fließgrenze [Pa] | Viskosität bei D = 10s-1 [Pa*s] |
|---|---|---|---|
| Vergleichskieselsäure | 15 | 0 | 232 |
| Erfindungsgemäße Kieselsäure | 11 | 0 | 237 |

Es ist deutlich zu erkennen, dass die erfindungsgemäße Kieselsäure ein deutlich besseres Einarbeitungsverhalten zeigt. Das heißt, sie wird schneller als die Vergleichskieselsäure eingearbeitet, obwohl sowohl die Verdickungswirkung als auch die sonstigen physikalischchemischen Daten vergleichbar sind.

## Patentansprüche

1. Oberflächenmodifizierte, pyrogen hergestellte Kieselsäure mit verbesserter Einarbeitbarkeit in flüssige Systeme, erhältlich dadurch, dass man die pyrogen hergestellte Kieselsäure, die in Form von Aggregaten von Primärpartikeln mit einer BET-Oberfläche von 300 ± 25 m²/g vorliegt und die Aggregate einer mittleren Fläche von 4800 - 6000 nm², einen mittleren, äquivalenten Kreisdurchmesser (ECD = Equivalent Circle Diameter) von 60 - 80 nm und einen mittleren Umfang von 580 - 750 nm aufweist, mit Hexamethyldisilazan als Oberflächenmodifizierungsmittel behandelt.

2. Verfahren zur Herstellung der oberflächenmodifizierten, pyrogen hergestellten Kieselsäure gemäß Anspruch 1, **dadurch gekennzeichnet, dass** man die pyrogen hergestellte Kieselsäure, die in Form von Aggregaten von Primärpartikeln mit einer BET-Oberfläche von 300 ± 25 m²/g vorliegt und die Aggregate einer mittleren Fläche von 4800 - 6000 nm2, einen mittleren, äquivalenten Kreisdurchmesser (ECD = Equivalent Circle Diameter) von 60 - 80 nm und einen mittleren Umfang von 580 - 750 nm aufweist, mit Hexamethyldisilazan als Oberflächenmodifizierungsmittel behandelt.

3. Verfahren nach Anspruch 2, **dadurch gekennzeichnet, dass** man die Kieselsäuren mit Wasser und anschließend mit dem Oberflächenmodifizierungsmittel besprüht.

4. Verfahren nach Anspruch 2, **dadurch gekennzeichnet, dass** man die Kieselsäuren mit dem Oberflächenmodifizierungsmittel in Dampfform behandelt und das Gemisch anschließend bei einer Temperatur von 50 bis 800 °C über einen Zeitraum von 0,1 bis 6 h thermisch behandelt.

5. Verwendung der oberflächenmodifizierten, pyrogen hergestellten Kieselsäure gemäß Anspruch 1 zur Rheologiesteuerung von flüssigen Systemen.

6. Verwendung der oberflächenmodifizierten, pyrogen hergestellten Kieselsäure gemäß Anspruch 1 zur Rheologiesteuerung von flüssigen Silikonkautschuksystemen (LSR).

## Claims

1. Surface-modified, pyrogenically prepared silica having improved ease of incorporation into liquid systems, obtainable in that the pyrogenically prepared silica, which is in the form of aggregates of primary particles having a BET surface area of 300 ± 25 m²/g and the aggregates have an average area of 4800-6000 nm², an average equivalent circle diameter (ECD) of 60-80 nm and an average circumference of 580-750 nm, is treated with hexamethyldisilazane as surface modifier.

2. Process for preparing the surface-modified, pyrogenically prepared silica according to Claim 1, **characterized in that** the pyrogenically prepared silica, which is in the form of aggregates of primary particles having a BET surface area of 300 ± 25 m²/g and the aggregates have an average area of 4800-6000 nm², an average equivalent circle diameter (ECD) of 60-80 nm and an average circumference of 580-750 nm, is treated with hexamethyldisilazane as surface modifier.

3. Process according to Claim 2, **characterized in that** the silicas are sprayed with water and subsequently with the surface modifier.

4. Process according to Claim 2, **characterized in that** the silicas are treated with the surface modifier in vapour form and the mixture is subsequently treated thermally at a temperature of 50 to 800°C over a period of 0.1 to 6 h.

5. Use of the surface-modified, pyrogenically prepared silica according to Claim 1 for controlling the rheology of liquid systems.

6. Use of the surface-modified, pyrogenically prepared silica according to Claim 1 for controlling the rheology of liquid silicone rubber (LSR) systems.

## Revendications

1. Silice préparée par voie pyrogène, modifiée en surface, présentant une aptitude améliorée à l'incorporation dans des systèmes liquides, pouvant être obtenue en ce qu'on traite la silice préparée par voie pyrogène, qui se trouve sous forme d'agrégats de particules primaires présentant une surface BET de 300 ± 25 m²/g et les agrégats présentant une surface moyenne de 4800-6000 nm², un diamètre de cercle équivalent moyen (ECD = Equivalent Circle Diameter) de 60-80 nm et une périphérie moyenne de 580-750 nm, avec de l'hexaméthyldisilazane comme agent de modification de surface.

2. Procédé pour la préparation de la silice préparée par voie pyrogène, modifiée en surface selon la revendication 1, **caractérisé en ce qu'**on traite la silice préparée par voie pyrogène, qui se trouve sous forme d'agrégats de particules primaires présentant une surface BET de 300 ± 25 m²/g et les agrégats présentant une surface moyenne de 4800-6000 nm², un diamètre de cercle équivalent moyen (ECD = Equivalent Circle Diameter) de 60-80 nm et une périphérie moyenne de 580-750 nm, avec de l'hexaméthyldisilazane comme agent de modification de surface.

3. Procédé selon la revendication 2, **caractérisé en ce qu'**on asperge la silice avec de l'eau, puis avec l'agent de modification de surface.

4. Procédé selon la revendication 2, **caractérisé en ce qu'**on traite la silice avec l'agent de modification de surface sous forme vapeur et on traite ensuite le mélange thermiquement à une température de 50 à 800°C pendant un laps de temps de 0,1 à 6 h.

5. Utilisation de la silice préparée par voie pyrogène, modifiée en surface selon la revendication 1, pour le réglage de la rhéologie de systèmes liquides.

6. Utilisation de la silice préparée par voie pyrogène, modifiée en surface selon la revendication 1, pour le réglage de la rhéologie de systèmes liquides de caoutchouc de silicone (LSR).
